(19) Europäisches Patentamt / European Patent Office / Office européen des brevets

(11) **EP 3 952 067 A1**

(12) **EUROPEAN PATENT APPLICATION**
published in accordance with Art. 153(4) EPC

(43) Date of publication:
**09.02.2022 Bulletin 2022/06**

(21) Application number: **20782830.2**

(22) Date of filing: **27.03.2020**

(51) International Patent Classification (IPC):
**H02K 3/02** $^{(2006.01)}$       **H01B 1/04** $^{(2006.01)}$
**H01B 5/02** $^{(2006.01)}$       **H01B 7/00** $^{(2006.01)}$
**H02K 3/47** $^{(2006.01)}$

(52) Cooperative Patent Classification (CPC):
**H01B 1/04; H01B 5/02; H01B 7/00; H02K 3/02; H02K 3/47**

(86) International application number:
**PCT/JP2020/013912**

(87) International publication number:
**WO 2020/203726 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068758**

(71) Applicant: **Furukawa Electric Co., Ltd.**
**Tokyo 100-8322 (JP)**

(72) Inventors:
• **AIZAWA Hideki**
  **Tokyo 100-8322 (JP)**
• **YAMASHITA Satoshi**
  **Tokyo 100-8322 (JP)**
• **MIYOSHI Kazutomi**
  **Tokyo 100-8322 (JP)**

(74) Representative: **Gunzelmann, Rainer**
**Wuesthoff & Wuesthoff**
**Patentanwälte PartG mbB**
**Schweigerstraße 2**
**81541 München (DE)**

(54) **CORELESS MOTOR**

(57)    To provide a coreless motor that includes a carbon nanotube electric wire with an excellent shape retention property as coil windings and excellent heat dissipation characteristics as coil windings. The coreless motor includes a rotating shaft, a rotor plate attached to the rotating shaft, and a coil supported by the rotor plate. The coil includes a carbon nanotube electric wire, the carbon nanotube electric wire including a carbon nanotube wire and a coating layer, the carbon nanotube wire including a plurality of carbon nanotubes, the coating layer including an insulating layer that covers the carbon nanotube wire so as to insulate the carbon nanotube wire. The carbon nanotube electric wire is such that when portions of 1 cm from opposite ends of each of carbon nanotube electric wires with a length of 12 cm are pinched with jigs, and each of the carbon nanotube electric wires is held in a horizontal state with a tension of 100 gf for 10 minutes, and then only the jig at one end of each of the carbon nanotube electric wires is removed, the proportion of carbon nanotube electric wires that drop at the one end by 1 cm or more relative to another end on the opposite side is less than or equal to 20%.

FIG.1

**Description**

Technical Field

The present invention relates to a coreless motor in which a carbon nanotube wire is used.

Background Art

As a power-line wire or a signal wire used in a variety of fields, such as in automobiles or industrial devices, an electric wire is used that includes a core wire made of one or more wires, and an insulating coating covering the core wire. As the wires forming the core wire, wires made of a metal, such as copper or copper alloy, are commonly used in light of electrical characteristics. For example, for a coreless motor without an iron core that has been increasingly demanded for lightweight motor applications in recent years, wires made of a metal like copper are used for coil windings (for example, see Patent Literature 1).

However, regarding such metal wires used for coil windings, there still remains a problem with the weight of the wires from the perspective of reducing the weight of the coreless motor. Thus, there has been a demand for wires replacing the conventional metal wires of copper and the like. In response to such demand, a technique of using carbon nanotubes for wires has been proposed, for example. A carbon nanotube has about one-fifth the specific gravity of copper (about half the specific gravity of aluminum) and has lower electric resistivity than copper (which has an electric resistivity of $1.68 \times 10^{-6}$ $\Omega \cdot$cm), thus exhibiting high electroconductivity. Therefore, by using a carbon nanotube wire, which is obtained by twisting carbon nanotubes together, for coil windings of a coreless motor, it is expected to achieve size reduction, weight reduction, and increased electroconductivity of the coreless motor in which the wire is used.

Document List

Patent Literature

Patent Literature 1: Japanese Patent Application Publication No. 2017-208973

Summary of Invention

Technical Problem

However, a carbon nanotube wire has lower rigidity than a metal wire. Therefore, when a carbon nanotube wire is used for coil windings, there has been a problem with the retention of the shape of the coil windings.
The present invention has been made in view of the aforementioned problem, and provides a coreless motor that includes a carbon nanotube wire with an excellent shape retention property and excellent heat dissipation characteristics as coil windings.

Solution to Problem

The aforementioned problem is solved by the following invention.

(1) A coreless motor including a rotating shaft, a rotor plate attached to the rotating shaft, and a coil supported by the rotor plate, wherein the coil includes a carbon nanotube electric wire, the carbon nanotube electric wire including a carbon nanotube wire and a coating layer, the carbon nanotube wire including a plurality of carbon nanotubes, the coating layer including an insulating layer that covers the carbon nanotube wire so as to insulate the carbon nanotube wire, and the carbon nanotube electric wire is such that when portions of 1 cm from opposite ends of each of carbon nanotube electric wires with a length of 12 cm are pinched with jigs, and each of the carbon nanotube electric wires is held in a horizontal state with a tension of 100 gf for 10 minutes, and then only the jig at one end of each of the carbon nanotube electric wires is removed, a proportion of carbon nanotube electric wires that drop at the one end by 1 cm or more relative to another end on the opposite side is less than or equal to 20%.
(2) The coreless motor according to (1) above, wherein the coating layer of the carbon nanotube electric wire includes only the insulating layer.
(3) The coreless motor according to (2) above, wherein a thickness of the coating layer is greater than or equal to 0.015 mm.
(4) The coreless motor according to (2) above, wherein a thickness of the coating layer is greater than or equal to 0.015 mm and less than or equal to 0.15 mm.

(5) The coreless motor according to (2) above, wherein a thickness of the coating layer is greater than or equal to 0.015 mm and less than or equal to 0.08 mm.

(6) The coreless motor according to (2) above, wherein a thickness of the coating layer is greater than or equal to 0.015 mm and less than or equal to 0.035 mm.

(7) The coreless motor according to (1) above, wherein the coating layer of the carbon nanotube electric wire includes the insulating layer as an inner layer and a fusing layer as an outer layer.

(8) The coreless motor according to (7) above, wherein a thickness of the insulating layer is greater than or equal to 0.003 mm.

(9) The coreless motor according to (7) above, wherein a thickness of the insulating layer is greater than or equal to 0.003 mm and less than 0.015 mm.

(10) The coreless motor according to (1) above, wherein the carbon nanotube electric wire includes a metal wire.

(11) The coreless motor according to (10) above, wherein the carbon nanotube electric wire includes a coating layer covering the carbon nanotube wire and the metal wire, the coating layer includes the insulating layer, and a thickness of the insulating layer is greater than or equal to 0.003 mm.

(12) The coreless motor according to (10) above, wherein a thickness of the insulating layer is greater than or equal to 0.003 mm and less than 0.015 mm.

(13) The coreless motor according to any one of (1) to (12) above, wherein a proportion of the carbon nanotube electric wire in the coil is greater than or equal to 60 wt%.

(14) The coreless motor according to any one of (1) to (13) above, wherein an orientation degree of the carbon nanotubes forming the carbon nanotube wire is less than or equal to 30°.

(15) The coreless motor according to any one of (1) to (14) above, wherein an average bundle length of the carbon nanotubes forming the carbon nanotube wire is greater than or equal to 3 $\mu$m.

Effects of Invention

According to the aspects of the present invention, it is possible to implement a coreless motor in which a carbon nanotube electric wire with an excellent shape retention property and excellent heat dissipation characteristics is used.

Brief Description of Drawings

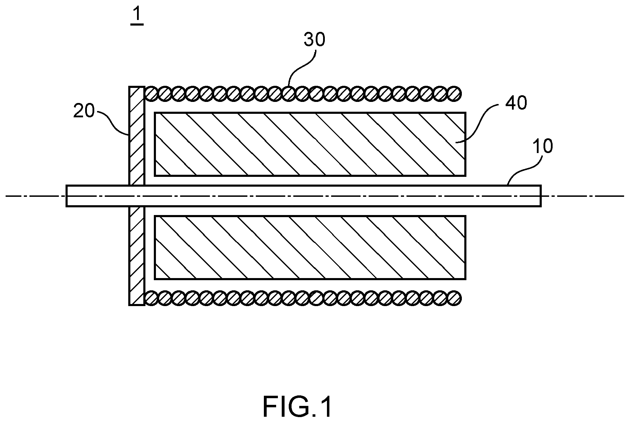

[Fig. 1] A side cross-sectional view of a coreless motor according to the present embodiment.

Description of Embodiments

A preferred embodiment of the present invention will be described with reference to the drawings. It should be noted that the following embodiment is only exemplary and thus, the present invention can take various forms within its scope.

<Configuration of coreless motor>

A configuration of a coreless motor according to the present embodiment will be described with reference to Fig. 1.

A coreless motor 1 includes a rotating shaft 10, a rotor plate 20, a coil 30, and a magnet 40. The rotor plate 20 is circular in shape, and has the rotating shaft 10 attached to its center. The coil 30 is cylindrical in shape, and is cantilever-supported at one end by the rotor plate 20. The magnet 40 is provided between the rotating shaft 10 and the coil 30. It should be noted that in the present embodiment, only the representative configuration of the coreless motor 1 is illustrated. The coreless motor 1 may also include other configurations.

The coil 30 includes a carbon nanotube (hereinafter referred to as "CNT") electric wire that includes a CNT wire made of CNTs and a coating layer covering the periphery of the CNT wire. Hereinafter, the CNT wire and the coating layer forming the CNT electric wire will be described.

(CNT wire)

The CNT wire is formed by twisting together CNT bundles each obtained by bundling a plurality of carbon nanotubes (hereinafter referred to as "CNTs") each having a layer structure of one or more layers. The outside diameter of the CNT wire 1 is 0.01 mm to 5 mm, for example. The CNT wire 1 may also be formed by twisting together a plurality of carbon nanotube composites each obtained by doping CNT bundles with a dissimilar element. Herein, the CNT wire means a CNT wire in which the proportion of CNTs is greater than or equal to 90 mass%. It should be noted that for calculation of the proportion of CNTs in the CNT wire, the proportions of plating and dopants are excluded. The longitudinal direction of CNT element wires 11 forms the longitudinal direction of the CNT wire 10. Thus, the CNT element wires 11 are linear.

Herein, a CNT is a tubular body with a single-layer structure or a multi-layer structure, which are called SWNT (single-walled nanotube) and MWNT (multi-walled nanotube), respectively. For example, a CNT with a two-layer structure has a three-dimensional network structure in which two tubular bodies each having a hexagonal lattice network structure are substantially coaxially arranged, and is called DWNT (double-walled nanotube). The hexagonal lattice that is the constitutional unit is a six-membered ring having carbon atoms at its vertices, and is adjacent to other six-membered rings. Such six-membered rings adjacent to one another are continuously bound together.

The property of a CNT depends on the chirality of the tubular body described above. The chirality is broadly divided into armchair type, zigzag type, and other chiral types. An armchair CNT exhibits metallic behavior, a chiral CNT exhibits semiconducting behavior, and a zigzag CNT exhibits behavior intermediate between metallic behavior and semiconducting behavior. Accordingly, the electroconductivity of a CNT greatly differs depending on the chirality of the CNT, and in order to improve the electroconductivity of a CNT aggregate, it has been considered important to increase the proportion of armchair CNTs that exhibit metallic behavior. Meanwhile, it has been found that chiral CNTs with semiconductor properties will exhibit metallic behavior when doped with a substance (i.e., dissimilar element) with an electron-donating property or an electron-accepting property. In addition, when a typical metal is doped with a dissimilar element, conduction electrons will scatter within the metal, resulting in decreased electroconductivity. Likewise, when metallic CNTs are doped with a dissimilar element, the electroconductivity of the metallic CNTs will decrease.

As described above, it is considered that there is a trade-off between the effect of doping metallic CNTs and the effect of doping semiconducting CNTs in terms of electroconductivity. Theoretically, it is desirable to individually produce metallic CNTs and semiconducting CNTs and perform a doping process only on the semiconducting CNTs and then combine the metallic CNTs and the doped semiconducting CNTs. However, with the existing process technology, it is difficult to selectively produce metallic CNTs and semiconducting CNTs and metallic CNTs and semiconducting CNTs are produced in a mixed state. Therefore, to improve the electroconductivity of a CNT wire made of a mixture of metallic CNTs and semiconducting CNTs, it is preferable to select a CNT structure that can be effectively doped with a dissimilar element or molecule.

In a CNT bundle including a plurality of CNT aggregates, the proportion of the sum of the number of CNTs with a two- or three-layer structure to the total number of CNTs is preferably greater than or equal to 50%, and more preferably greater than or equal to 75%. In other words, provided that the total number of CNTs forming a single CNT bundle is $N_{TOTAL}$, the sum of the number of CNTs(2) with a two-layer structure among all CNTs is $N_{CNT(2)}$, and the sum of the number of CNTs(3) with a three-layer structure among all CNTs is $N_{CNT(3)}$, the proportion can be represented by Formula (1) below.

$$(N_{CNT(2)} + N_{CNT(3)})/N_{TOTAL} \times 100 \ (\%) \geq 50 \ (\%) \ ... \ (1)$$

A CNT with a small number of layers, such as a two- or three-layer structure, has relatively higher electroconductivity than a CNT with more layers. In addition, a dopant is introduced into the inside of the innermost layer of a CNT or into inter-CNT gaps formed by a plurality of CNTs. The interlayer distance in a CNT is equivalent to the interlayer distance (0.335 nm) in graphite. Thus, in the case of a multi-layer CNT, it would be difficult for a dopant to enter the gap between the layers of the CNT due to its size. Therefore, while the doping effect is exhibited when a dopant is introduced into the inside and outside of a CNT, in the case of a multi-layer CNT, the doping effect is difficult to be exhibited in an inner tube not in contact with the outermost layer or the innermost layer. For such reasons, when a doping process is performed on CNTs with multi-layer structures, the highest doping effect is obtained with CNTs with a two- or three-layer structure. In addition, it is often the case that a dopant is a highly reactive reagent that exhibits high electrophilicity or high nucleophilicity. CNTs with a single-layer structure have lower rigidity than and inferior chemical resistance to CNTs with a multi-layer structure. Thus, if a doping process is performed on CNTs with a single-layer structure, the structures of the CNTs may become destroyed. Therefore, the present invention is focused on the number of CNTs with a two- or three-layer structure included in a CNT aggregate. If the proportion of the sum of the number of CNTs with a two- or three-layer structure is less than 50%, the proportion of CNTs with a single-layer structure or a four-layer structure becomes high correspondingly, which results in a lower doping effect for the entire CNT aggregate, making it difficult to obtain high electric conductivity. Accordingly, the proportion of the sum of CNTs with a two- e or three-layer structure is set to the value in the aforementioned range.

A dopant introduced into CNTs is not limited to a particular dopant as long as it can improve electroconductivity. Examples of dopants include one or more dissimilar elements or molecules selected from the group consisting of nitric acid, sulfuric acid, iodine, bromine, potassium, sodium, boron, and nitrogen.

The outside diameter of each of the outermost layers of the CNTs forming the CNT bundle is preferably less than or equal to 5.0 nm. If the outside diameter of each of the outermost layers of the CNTs forming the CNT bundle is over 5.0 nm, the porosity resulting from the inter-CNT gaps and the gaps within the innermost layer will increase, which results in undesirably decreased electroconductivity. Therefore, the outside diameter of each of the outermost layers of the CNTs forming the CNT bundle is set to less than or equal to 5.0 nm.

The orientation degree (i.e., azimuth angle) of CNTs applied to the coil 30 of the coreless motor 1 is preferably less than or equal to 30°. When the orientation degree of CNTs is less than or equal to 30°, the CNTs are uniformly arranged, and the rigidity of the resulting CNT wire improves, whereby the shape retention property of the coreless motor improves. Further, from the perspective of the heat dissipation ability of the resulting CNT electric wire, the orientation degree of CNTs is more preferably greater than or equal to 5° and less than or equal to 30°.

The orientation degree of CNTs is measured by the following method, for example. A CNT wire is sliced into a thin piece in the cross-sectional direction with a thickness of 50 $\mu$m using a focused ion beam (FIB). Next, an X-ray is allowed to become incident on the plane of the sliced piece in the direction perpendicular thereto using a small-angle X-ray scattering apparatus. Then, the azimuth plot (i.e., azimuth angle) of the obtained scatter peak is fitted with the Gaussian function or the Lorenz function so as to measure the full-width at half maximum $\Delta\theta$ in azimuth angle.

The average bundle length of CNTs applied to the coil 30 of the coreless motor 1 is preferably greater than or equal to 3 $\mu$m. When the average bundle length of CNTs is greater than or equal to 3 $\mu$m, the resulting CNT electric wire will exhibit high heat dissipation ability. The average bundle length of CNTs is more preferably greater than or equal to 5 $\mu$m, and further preferably greater than or equal to 7 $\mu$m from the perspective of the heat dissipation ability of the resulting CNT electric wire.

As a suitable combination of the orientation degree and the average bundle length of CNTs, from the perspective of the heat dissipation ability of the resulting CNT electric wire, a combination of an orientation degree of less than or equal to 30° and an average bundle length of greater than or equal to 3 $\mu$m is preferable, a combination of an orientation degree of less than or equal to 25° and an average bundle length of greater than or equal to 5 $\mu$m is more preferable, and a combination of an orientation degree of less than or equal to 20° and an average bundle length of greater than or equal to 7 $\mu$m is further preferable.

The CNT electric wire has a feature such that when portions of 1 cm from the opposite ends of a carbon nanotube electric wire with a length of 12 cm are pinched with jigs, and the carbon nanotube electric wire is held in the horizontal state with a tension of 100 gf for 10 minutes, and then only the jig at one end is removed, the proportion of carbon nanotube electric wires that drop at the one end by 1 cm or more relative to another end on the opposite side is less than or equal to 20%. Such a CNT electric wire exhibits an excellent shape retention property and excellent heat dissipation characteristics as the coil 30 of the coreless motor 1. Preferably, when portions of 1 cm from the opposite ends of a carbon nanotube electric wire with a length of 12 cm is pinched with jigs, and the carbon nanotube electric wire is held in the horizontal state with a tension of 100 gf for 10 minutes, and then only the jig at one end is removed, the proportion of carbon nanotube electric wires that drop at the one end by 1 cm or more relative to another end on the opposite side is greater than or equal to 5%. This is to ensure the flexibility of the carbon nanotube wire and improve the workability in winding for producing the coil 30.

The proportion of the CNT electric wire in terms of weight in the entire coil 30 is preferably greater than or equal to 60 wt%. When the proportion of the CNT electric wire is greater than or equal to 60 wt%, excellent performance can be exhibited regarding the heat dissipation ability and the acceleration property of the CNT electric wire in the coreless motor 1. The proportion of the CNT electric wire in the coil 30 is more preferably greater than or equal to 75 wt%, and further preferably greater than or equal to 90 wt%.

The CNT electric wire may include not only a CNT wire but also a metal wire. Examples of metal wires include copper (Cu), copper alloy, aluminum (Al), and aluminum alloy.

(Coating layer)

The coating layer includes an insulating layer formed on the periphery of the CNT wire and covering the CNT wire so as to insulate it. The insulating layer contains a resin material, and is formed with thermoplastic resin, for example. Examples of thermoplastic resins include polyolefin (such as polyethylene or polypropylene), polyamide, polyester (such as polyethylene terephthalate (PET), polybutylene terephthalate (PBT), or copolymerized polyester mainly containing ethylene terephthalate units or butylene terephthalate units), polycarbonate, and polyacetal. Such resins can be blended or modified as appropriate.

When the coating layer includes only an insulating layer, the thickness of the insulating layer is preferably greater than or equal to 0.015 mm. Herein, the wording "only an insulating layer" is to clarify the difference between the insulating layer and a fusing layer described below and the insulating layer may further include other materials, such as additives, filler materials, and a bonding layer for bonding the CNT wire and the insulating layer together, in addition to the resin material. If the thickness of the insulating layer is less than 0.015 mm, the rigidity of the insulating layer becomes low, undesirably making it difficult for the resulting CNT electric wire to exhibit sufficient rigidity for retaining the shape of the coil 30. On the other hand, if the thickness of the insulating layer is greater than or equal to 0.015 mm, it is possible to obtain a CNT electric wire with a sufficient shape retention property for the coil 30 of the coreless motor 1. In addition to the shape retention property, from the perspective of the heat dissipation ability required of the coreless motor 1, the thickness of the insulating layer is more preferably greater than or equal to 0.015 mm and less than or equal to 0.15 mm. Further, from the perspective of the acceleration property required of the coreless motor 1 in addition to the shape retention property and heat dissipation ability, the thickness of the insulating layer is more preferably greater than or equal to 0.015 mm and less than or equal to 0.08 mm, and further preferably greater than or equal to 0.015 mm and less than or equal to 0.035 mm.

It should be noted that the thickness of the insulating layer covering the CNT wire can be set greater than the thickness of an insulating layer covering a metal wire. Since metals such as Cu (copper) have thermal conductivity with lower anisotropy than CNTs, heat generated by such metals is easily transferred to an insulating layer of resin. Therefore, an electric wire using a metal wire has inferior heat dissipation ability to a CNT electric wire even if the thickness of the insulating layer is almost the same as a CNT wire. Therefore, the CNT electric wire can exhibit favorable heat dissipation ability even if it is covered with an insulating layer with a thickness greater than that of an insulating layer covering a metal wire.

When the coating layer includes an insulating layer and a fusing layer as an outer layer of the insulating layer, the thickness of the insulating layer is preferably greater than or equal to 0.003 mm. If the thickness of the insulating layer is less than 0.003 mm, the rigidity of the insulating layer becomes low, undesirably making it difficult for the resulting CNT electric wire to exhibit effective rigidity for retaining the shape of the coil 30. On the other hand, if the thickness of the insulating layer is greater than or equal to 0.003 mm, it is possible to obtain a CNT electric wire with an effective shape retention property for the coil 30 of the coreless motor 1. In addition, from the perspective of the heat dissipation ability required of the coreless motor 1 in addition to the shape retention property, the thickness of the insulating layer is more preferably greater than or equal to 0.003 mm and less than 0.015 mm.

The fusing layer contains polyamide imide, for example. The thickness of the fusing layer is preferably greater than or equal to 0.001 mm and less than or equal to 0.02 mm.

When a conductor of the CNT electric wire includes a metal wire as an auxiliary wire for the CNT wire, the thickness of the insulating layer is preferably greater than or equal to 0.003 mm. If the thickness of the insulating layer is less than 0.003 mm, the rigidity of the insulating layer becomes low, undesirably making it difficult for the resulting CNT electric wire to exhibit effective rigidity for retaining the shape of the coil 30. On the other hand, if the thickness of the insulating layer is greater than or equal to 0.003 mm, it is possible to obtain a CNT electric wire with an effective shape retention property for the coil 30 of the coreless motor 1. In addition, from the perspective of the heat dissipation ability required of the coreless motor 1 in addition to the shape retention property, the thickness of the insulating layer is more preferably greater than or equal to 0.003 mm and less than 0.015 mm.

When a metal wire is used as an auxiliary wire, the diameter of the metal wire is preferably 0.02 mm to 1 mm. If the diameter of the metal wire is less than 0.02 mm, the shape retention property becomes insufficient. If the diameter is greater than 1 mm, it would be difficult to increase the number of turns of the coil for a small motor, resulting in degraded properties of the coreless motor. Further, the proportion of the metal wire in the CNT electric wire is preferably greater than or equal to 0.1 wt% and less than 50 wt%. If the proportion of the metal wire in terms of weight in the CNT electric wire is less than 0.1 wt%, the shape retention property becomes insufficient, and if the proportion is greater than or equal to 50 wt%, the coil becomes heavy.

For increasing the rigidity of the CNT wire, a plurality of factors are involved, such as increasing the density and increasing crystallinity of the CNT wire. For example, the density is preferably greater than or equal to 1.3 g/cm$^3$, and to this end, it is possible to either increase the density of CNT aggregates forming the CNT wire themselves or increase the twisting number of element wires forming the CNT wire. In particular, the twisting number of the CNT wire is preferably greater than or equal to 100 T/M. If the twisting number of the wire is greater than or equal to 100 T/M, the element wires forming the CNT wire are densely arranged, thus increasing the strength of the wire. If the twisting number of the wire is less than or equal to 500 T/M, it is possible to achieve a good balance between the density and the machinability of the shape of the CNT electric wire. Further, the twisting number of the CNT wire is more preferably greater than or equal to 100 T/M and less than or equal to 300 T/M. If the twisting number of the wire is greater than or equal to 100 T/M and less than or equal to 300 T/M, it becomes easier for a resin to bite into the wire so that the rigidity of the CNT wire covered with the resin becomes uniform.

Regarding crystallinity, the G/D ratio is preferably greater than or equal to 50. This is because if the G/D ratio of the wire is greater than or equal to 50, the proportion of amorphous carbon is low, thus allowing effective resiliency of the CNT electric wire to be exhibited.

[Examples]

Hereinafter, Examples according to the embodiment of the present invention will be described. It should be noted that the following Examples only exemplarily illustrate the aspects according to the present invention, and that the present invention is not limited thereto.

(Example 1)

A coreless motor having a CNT electric wire as a coil was produced in which the electric wire forming the coil includes four-strand CNT bundles with an outside diameter of 0.05 mm, the twisting number being 100 T/M, and also includes an insulating layer of polybutylene terephthalate (PBT) with a thickness of 0.02 mm (the ratio of the insulating layer thickness/the wire outside diameter is 0.4).

(Example 2)

Example 2 is the same as Example 1 except that the thickness of the insulating layer is 0.04 mm (the ratio of the insulating layer thickness/the wire outside diameter is 0.8).

(Example 3)

Example 3 is the same as Example 1 except that the thickness of the insulating layer is 0.1 mm (the ratio of the insulating layer thickness/the wire outside diameter is 2.0).

(Example 4)

Example 4 is the same as Example 1 except that the thickness of the insulating layer is 0.2 mm (the ratio of the insulating layer thickness/the wire outside diameter is 4.0).

(Example 5)

Example 5 is the same as Example 1 except that a CNT electric wire having an insulating layer, which has a thickness of 0.004 mm (the ratio of the insulating layer thickness/the wire outside diameter is 0.08) and includes a polyurethane layer and a fusing layer, was used. It should be noted that the electric wire of the present Example has a polyurethane layer with a thickness of 0.002 mm formed as an outer layer of the wire and further has a self-fusing layer of polyamide imide with a thickness of 0.002 mm formed as an outer layer of the polyurethane layer.

(Example 6)

Example 6 is the same as Example 5 except that a polyurethane layer with a thickness of 0.005 mm is formed as an outer layer of the wire, and further, a self-fusing layer of polyamide imide with a thickness of 0.005 mm is formed as an outer layer of the polyurethane layer.

(Example 7)

A coreless motor having a CNT electric wire as a coil was produced in which the electric wire forming the coil includes three-strand CNT bundles with an outside diameter of 0.05 mm and one-strand Cu (copper) wire with an outside diameter of 0.05 mm, and also includes an insulating layer of polypropylene (PP) with a thickness of 0.01 mm (the ratio of the insulating layer thickness/the wire outside diameter is 0.2).

(Comparative Example 1)

Comparative Example 1 is the same as Example 1 except that a CNT electric wire, which includes an insulating layer of polypropylene (PP) with a thickness of 0.01 mm (the ratio of the insulating layer thickness/the wire outside diameter is 0.2), was used.

(Comparative Example 2)

Comparative Example 2 is the same as Comparative Example 1 except that the insulating layer is made of PBT.

(Comparative Example 3)

A coreless motor having an electric wire as a coil was produced in which the electric wire includes one-strand Cu (copper) wire with an outside diameter of 0.1 mm, and an insulating layer of polypropylene (PP) with a thickness of 0.01 mm (the ratio of the insulating layer thickness/the wire outside diameter is 0.2).

It should be noted that as the CNT wires used in Examples 1 to 7 and Comparative Examples 1 to 2, CNT wires with an orientation degree of 5° to 30° and an average bundle length of greater than or equal to 3 $\mu$m were used.

Next, the properties of the connected structure were evaluated by the following method.

(a) Shape retention property of CNT electric wire

Portions of 1 cm from the opposite ends of a CNT electric wire with a length of 12 cm were pinched with jigs, and the CNT electric wire was held in the horizontal state with a tension of 100 gf applied thereto for 10 minutes. Then, only the jig at one end was removed, and the distance of a portion of the CNT electric wire that dropped at the one end relative to another end on the opposite side was measured. 10 CNT electric wires were tested in a similar manner, and evaluation was conducted such that if there was no wire that dropped by a distance of greater than or equal to 1 cm, the result is indicated by "Excellent;" if there were one or two wires that dropped by a distance of greater than or equal to 1 cm, the result is indicated by "Good;" and if there were three or more wires that dropped by a distance of greater than or equal to 1 cm, the result is indicated by "Poor." If the result was "Excellent" or "Good," the shape retention property was evaluated as excellent. It should be noted that the shape retention property indicated by "Excellent" was evaluated as the most excellent, and that indicated by "Good" was evaluated as the second excellent.

(b) Heat dissipation ability of CNT electric wire

The time until the temperature of the coil reached 100°C when a current of 0.5 A was flowed therethrough was measured. If the measured time was longer than or equal to 100 seconds, the result is indicated by "Excellent;" if the measured time was 50 to 100 seconds, the result is indicated by "Good;" if the measured time was 20 to 50 seconds, the result is indicated by "Fair;" and if the measured time was shorter than 20 seconds, the result is indicated by "Poor." If the result is any one of "Excellent," "Good," or "Fair," the heat dissipation ability was evaluated as excellent. It should be noted that the heat dissipation ability indicated by "Excellent" was evaluated as the most excellent, and those indicated by "Good" and "Fair" were evaluated as the second excellent and third excellent, respectively.

(c) Acceleration property of coreless motor

The time until the rotation speed of the coreless motor reached 5000 rpm when a current of 0.5 A was supplied thereto was measured. If the measured time was shorter than 1 second, the result is indicated by "Good;" if the measured time was 1 to 2 seconds, the result is indicated by "Fair;" and if the measured time was over 2 seconds, the result is indicated by "Poor." If the result is "Good" or "Fair," the acceleration property was evaluated as excellent. It should be noted that the acceleration property indicated by "Good" was evaluated as the most excellent, and that indicated by "Fair" was evaluated as the second excellent.

Table 1 illustrates the measurement and evaluation results of Examples 1 to 7 and Comparative Examples 1 to 3 above.

[Table 1]

| | Main Wire | | | Auxillary Wire | | | Coating Layer | | | | Shape Retention Property | Heat Dissipation Ability | Acceleration Property |
|---|---|---|---|---|---|---|---|---|---|---|---|---|---|
| | Type | Wire Diameter [mm] | Number of Strands | Type | Wire Diameter [mm] | Number of Strands | Insulating Layer | Fusing Layer | Thickness [mm] | Ratio of Thickness /Wire Diameter | | | |
| Example 1 | CNT | 0,05 | 4 | | - | - | PBT | - | 0,02 | 0,4 | Good | Excellent | Excellent |
| Example 2 | CNT | 0,05 | 4 | None | - | - | PDT | - | 0,04 | 0,8 | Good | Excellent | Good |
| Example 3 | CNT | 0,05 | 4 | None | - | - | PBT | - | 0,1 | 2 | Excellent | Fair | Fair |
| Example 4 | CNT | 0,05 | 4 | None | - | - | PBT | - | 0,2 | 4 | Excellent | Fair | Poor |
| Example 5 | CNT | 0,05 | 4 | None | - | - | Polyurethane | Polyamide Imide | 0,004 | 0,08 | Good | Excellent | Excellent |
| Example 6 | CNT | 0,05 | 4 | None | - | - | Polyurethane | Polyamide Imide | 0,01 | 0,2 | Good | Excellent | Excellent |
| Example 7 | CNT | 0,05 | 3 | Cu | I 0,05 | 1 | PP | - | 0,01 | 0,2 | Good | Excellent | Excellent |
| Comparative Example 1 | CNT | 0,05 | 4 | None | - | - | PP | - | 0,01 | 0,2 | Poor | - | - |
| Comparative Example 2 | CNT | 0,05 | 4 | None | - | - | PBT | - | 0,01 | 0,2 | Poor | - | - |
| Comparative Example 3 | Cu | 0,1 | 1 | None | - | - | PP | - | 0,02 | 0,2 | Good | Poor | Poor |

As illustrated in Table 1, each of the coreless motors of Examples 1 to 7 was evaluated as having a favorable shape retention property and favorable heat dissipation ability.

Regarding the coreless motor having a coating layer that includes only an insulating layer, Examples 1 to 3 in which the thickness of the coating layer is greater than or equal to 0.015 mm and less than or equal to 0.15 mm were evaluated as having a favorable acceleration property in addition to the shape retention property and heat dissipation ability. Further, Examples 1 and 2 in which the thickness of the coating layer is greater than or equal to 0.015 mm and less than or equal to 0.08 mm were evaluated as having a more favorable acceleration property, and Example 1 in which the thickness of the coating layer is greater than or equal to 0.015 mm and less than or equal to 0.035 mm was evaluated as having a further favorable acceleration property.

In addition, regarding the coreless motor having a coating layer that includes an insulating layer and a fusing layer, Examples 5 and 6 in which the thickness of the insulating layer is greater than or equal to 0.003 mm and less than 0.015 mm were evaluated as having a favorable acceleration property in addition to the shape retention property and heat dissipation ability.

Further, regarding the coreless motor having a CNT electric wire that includes a metal wire (i.e., Cu wire), Examples 5 and 6 in which the thickness of the coating layer is greater than or equal to 0.003 mm and less than 0.015 mm were evaluated as having a favorable acceleration property in addition to the shape retention property and heat dissipation ability.

On the other hand, as illustrated in Table 1, the coreless motors of Comparative Examples 1 and 2 were not evaluated as having a favorable shape retention property because the thickness of the coating layer is 0.01 mm while the coating layer includes only an insulating layer (i.e., PBT or PP). In addition, the coreless motor of Comparative Example 3 was evaluated as having a favorable shape retention property but not having a favorable heat dissipation ability or acceleration property because the electric wire used is not a CNT wire but a copper wire. This is considered to be because the thermal conductivity of the copper wire has low anisotropy, that is, heat is more likely to be transferred to the side of the coating layer, and is less likely to be released to the outside.

List of Reference Signs

1    coreless motor
10   rotating shaft
20   rotor plate
30   coil
40   magnet

**Claims**

1. A coreless motor comprising:

   a rotating shaft;
   a rotor plate attached to the rotating shaft; and
   a coil supported by the rotor plate,
   wherein:

   the coil comprises a carbon nanotube electric wire, the carbon nanotube electric wire comprising a carbon nanotube wire and a coating layer, the carbon nanotube wire comprising a plurality of carbon nanotubes, the coating layer comprising an insulating layer that covers the carbon nanotube wire so as to insulate the carbon nanotube wire, and
   the carbon nanotube electric wire is such that when portions of 1 cm from opposite ends of each of carbon nanotube electric wires with a length of 12 cm are pinched with jigs, and each of the carbon nanotube electric wires is held in a horizontal state with a tension of 100 gf for 10 minutes, and then only the jig at one end of each of the carbon nanotube electric wires is removed, a proportion of carbon nanotube electric wires that drop at the one end by 1 cm or more relative to another end on the opposite side is less than or equal to 20%.

2. The coreless motor according to claim 1, wherein the coating layer of the carbon nanotube electric wire consists of the insulating layer.

3. The coreless motor according to claim 2, wherein a thickness of the coating layer is greater than or equal to 0.015 mm.

4. The coreless motor according to claim 2, wherein a thickness of the coating layer is greater than or equal to 0.015 mm and less than or equal to 0.15 mm.

5. The coreless motor according to claim 2, wherein a thickness of the coating layer is greater than or equal to 0.015 mm and less than or equal to 0.08 mm.

6. The coreless motor according to claim 2, wherein a thickness of the coating layer is greater than or equal to 0.015 mm and less than or equal to 0.035 mm.

7. The coreless motor according to claim 1, wherein the coating layer of the carbon nanotube electric wire comprises the insulating layer as an inner layer and a fusing layer as an outer layer.

8. The coreless motor according to claim 7, wherein a thickness of the insulating layer is greater than or equal to 0.003 mm.

9. The coreless motor according to claim 7, wherein a thickness of the insulating layer is greater than or equal to 0.003 mm and less than 0.015 mm.

10. The coreless motor according to claim 1, wherein the carbon nanotube electric wire comprises a metal wire.

11. The coreless motor according to claim 10,
    wherein:

    the carbon nanotube electric wire comprises a coating layer covering the carbon nanotube wire and the metal wire,
    the coating layer includes the insulating layer, and
    a thickness of the insulating layer is greater than or equal to 0.003 mm.

12. The coreless motor according to claim 10, wherein a thickness of the insulating layer is greater than or equal to 0.003 mm and less than 0.015 mm.

13. The coreless motor according to any one of claims 1 to 12, wherein a proportion of the carbon nanotube electric wire in the coil is greater than or equal to 60 wt%.

14. The coreless motor according to any one of claims 1 to 13, wherein an orientation degree of the carbon nanotubes forming the carbon nanotube wire is less than or equal to 30°.

15. The coreless motor according to any one of claims 1 to 14, wherein an average bundle length of the carbon nanotubes forming the carbon nanotube wire is greater than or equal to 3 $\mu$m.

FIG.1

## INTERNATIONAL SEARCH REPORT

| International application No. |
| --- |
| PCT/JP2020/013912 |

### A. CLASSIFICATION OF SUBJECT MATTER

Int. Cl. H02K3/02(2006.01)i, H01B1/04(2006.01)i, H01B5/02(2006.01)i, H01B7/00(2006.01)i, H02K3/47(2006.01)i
FI: H02K3/02, H01B7/00, H01B7/00 303, H01B5/02 Z, H01B1/04, H02K3/47

According to International Patent Classification (IPC) or to both national classification and IPC

### B. FIELDS SEARCHED

Minimum documentation searched (classification system followed by classification symbols)
Int. Cl. H02K3/02, H01B1/04, H01B5/02, H01B7/00, H02K3/47

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2017-208973 A (NIDEC COPAL CORP.) 24 November 2017, paragraphs [0011], [0012], fig. 1 (Family: none) | 1-15 |
| Y | JP 2009-183012 A (DENSO CORP.) 13 August 2009, paragraphs [0037]-[0047], fig. 1-6 | 1-15 |
| Y | JP 2012-10583 A (YAZAKI CORP.) 12 January 2012, paragraph [0027], fig. 1-3 | 1-15 |
| Y | JP 2004-215473 A (ARAI, Hiroshi) 29 July 2004, paragraphs [0001]-[0006] (Family: none) | 1-15 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01.06.2020 | 09.06.2020 |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2020/013912

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2006-100039 A (HONDA MOTOR CO., LTD.) 13 April 2006, paragraphs [0027]-[0033], fig. 5, 6 (Family: none) | 7-15 |
| Y | JP 2016-111795 A (KUSATSU ELECTRIC CO., LTD.) 20 June 2016, paragraph [0026] (Family: none) | 7-15 |
| Y | JP 2013-69562 A (MITSUBISHI CABLE INDUSTRIES, LTD.) 18 April 2013, paragraph [0013], fig. 1 (Family: none) | 10-15 |
| Y | Microfilm of the specification and drawings annexed to the request of Japanese Utility Model Application No. 43510/1982 (Laid-open No. 146318/1983) (MEIDENSHA CORP.) 01 October 1983, description, page 3, line 8 to page 5, line 9, fig. 1, 2 (Family: none) | 10-15 |

Form PCT/ISA/210 (continuation of second sheet) (January 2015)

## INTERNATIONAL SEARCH REPORT
Information on patent family members

| | | International application No. |
| | | PCT/JP2020/013912 |

| Patent Documents referred to in the Report | Publication Date | Patent Family | Publication Date |
|---|---|---|---|
| JP 2017-208973 A | 24.11.2017 | (Family: none) | |
| JP 2009-183012 A | 13.08.2009 | US 2009/0191074 A1 paragraphs [0044]-[0054], fig. 1-6 | |
| JP 2012-10583 A | 12.01.2012 | US 2013/0181570 A1 paragraph [0036], fig. 1-3 WO 2011/148978 A1 EP 2579433 A1 CN 102918754 A | |
| JP 2004-215473 A | 29.07.2004 | (Family: none) | |
| JP 2006-100039 A | 13.04.2006 | (Family: none) | |
| JP 2016-111795 A | 20.06.2016 | (Family: none) | |
| JP 2013-69562 A | 18.04.2013 | (Family: none) | |
| JP 58-146318 U1 | 01.10.1983 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017208973 A